# EUROPEAN PATENT APPLICATION

(11) **EP 3 048 420 A1**
(43) Date of publication of application: **27.07.2016**
(21) Application number: 16150483.2
(22) Date of filing: 07.01.2016
(51) Int. Cl.: G01C 19/72

(54) **SYSTEMS AND METHODS FOR AN OPTICAL FREQUENCY COMB STIMULATED BRILLOUIN SCATTERING GYROSCOPE WITH RIGID OPTICAL WAVEGUIDE RESONATOR**

(30) Priority: 14.01.2015 US 201562103158 P; 07.04.2015 US 201514680331
(71) Applicant: Honeywell International Inc., Morris Plains, NJ 07950 (US)
(72) Inventor: WU, Jianfeng, Morris Plains, NJ 07950 (US); SALIT, Mary K., Morris Plains, NJ 07950 (US); STRANDJORD, Lee K., Morris Plains, NJ 07950 (US); SANDERS, Glen A., Morris Plains, NJ 07950 (US); QIU, Tiequn, Morris Plains, NJ 07950 (US)
(74) Representative: Houghton, Mark Phillip

(57) **Abstract**

Systems and methods for an optical frequency comb stimulated Brillouin scattering gyroscope with a rigid optical waveguide resonator are provided. In one embodiment, a system comprises:a light source that produces an optical frequency comb comprising a multiple-frequency light field;a rigid optical waveguide resonator coupled to the light source, wherein a recirculating optical frequency comb produced from the optical frequency comb propagates in a first direction around the rigid optical waveguide resonator and generates within the rigid optical waveguide a SBS light field comprising at least one SBS frequency component, and wherein one or more optical frequency components of the recirculating optical frequency comb are locked on resonance peaks of the rigid optical waveguide resonator; andan optical mixer configured to produce an optical beat signal that varies as a function of a frequency difference between the stimulated Brillouin scattering light field and the recirculating optical frequency comb.

## Description

### CROSS-REFERENCE TO RELATED APPLICATIONS

This application claims priority to and the benefit of U.S. Provisional Application62/103,158 entitled "OPTICAL FREQUENCY COMB STIMULATED BRILLOUIN SCATTERING GYROSCOPE WITH RIGID OPTICAL WAVEGUIDE RESONATOR" filed on January 14, 2015,which is herein incorporated by reference in its entirety.

### BACKGROUND

There is a need for low cost, high performance gyroscopes for navigation systems, precision point systems, and guidance systems. Passive opticalresonator gyroscopes, such as resonator fiber optic gyroscopes, are a type of gyroscope that is a promising contender for a next generation navigation grade gyroscope. Passive optical resonator gyroscopes have the potential to provide a solution that has high resolution at a low cost.Passive optical resonator gyroscopes are gyroscopes that use the Sagnac effect to measure resonance frequency shifts due to inertial rotation in a resonator, where the resonator does not contain a gain medium that leads to laser light generation inside the resonator.However, passive opticalresonant gyroscopes generally include multiple laser sources outside the resonator and complicated locking schematics, or optical frequency shifters, which significantly increase production cost. If a solid core optical fiber resonator is used, which may allow for a high sensitivity in measuringrotation rate, the laser light intensity within the fiber resonator coil maygenerate Brillouin scattering within the fiber resonator coil of the gyroscope, where the Brillouin scattering degrades the performance of the gyroscope. Further the optical fiber used to fabricate a fiber resonator coil can be relatively bulky, expensive to make and wind, requires relatively expensive coupling optics, and can experience performance variations due to environmental factors.

### SUMMARY

Systems and methods for an optical frequency comb stimulated Brillouin scattering gyroscope with a rigid optical waveguide resonator are provided. In one embodiment, a system comprises: a light source that produces an optical frequency comb comprising a multiple-frequency light field; a rigid optical waveguide resonator coupled to the light source, wherein a recirculating optical frequency comb produced from the optical frequency comb propagates in a first direction around the rigid optical waveguide resonator and generates within the rigid optical waveguide a SBS light field comprising at least one SBS frequency component, and wherein one or more optical frequency components of the recirculating optical frequency comb are locked on resonance peaks of the rigid optical waveguide resonator; and an optical mixer configured to produce an optical beat signal that varies as a function of a frequency difference between the stimulated Brillouin scattering light field and the recirculating optical frequency comb.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of a gyroscope systemin one embodiment described in the present disclosure;
Figure 2 is a block diagram of a gyroscope system in one embodiment described in the present disclosure;
Figures 3A-3C are frequency diagrams illustrating the frequencies of stimulated Brillouin scattering (SBS)multiple-frequency light field and an optical frequency comb in certain embodiments described in the present disclosure; and
Figure 4 is a flow diagram of a method for determining the rate of rotation for a gyroscope in one embodiment described in the present disclosure.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments of the present disclosure provide for resonator optical gyroscopes where the resonator comprises a rigid waveguide such as a lithographically fabricated waveguide formed on a rigid substrate. The systems and methods described herein further provide a low cost, high performance gyroscope using a single laser source that produces an optical frequency comb. The optical frequency comb propagates around the optical waveguide resonator with at least one frequency component havinga sufficient amplitude to produce stimulated Brillouin scattering (SBS) that counter-propagates around the optical waveguide resonator in the direction opposite to the optical frequency comb. Both the optical frequency comb, and the stimulated Brillouin scattering are constrained to match the resonance frequencies of the optical waveguide resonators associated with their particular direction of propagation.The optical frequency comb is locked to the resonances in the first direction (for example, the clockwise, CW, direction), for example, through servo electronics that control the laser light source. The generated SBS light frequencies are automatically on resonance in the second direction (for example, the counter-clockwise, CCW, direction) because lasers by their nature only output light at frequencies which resonate internally. The differences of the resonance frequencies in the two opposite directions contain information about the rotation rate of the gyro. The combination of using the optical frequency comb and an SBS lightfield intentionally generated in the rigid optical waveguide resonator can significantly reduce the cost of a navigation grade resonator optical gyroscope as compared to systems requiring two light sources. In particular, one or more embodiments of the gyroscope described herein, utilize a beat frequency signal derived from the optical frequency comb and SBS light to detect rotation rate.

Because the SBS lightisfrequency shifted by a Brillouin shift associated with the material used to fabricate the rigid optical waveguide resonator(for example, about 11 GHz in SiO₂), the SBS light and the optical frequency comb do not necessarily overlap in frequency. Whenthe optical frequency comb and the SBS light do not have overlapping frequency spectra in the gyro resonator, the optical frequency comb and the SBS light do not becomefrequency-locked on to one another when the CW wave backscatters into the CCW direction, or vice versa. Thus the gyroscope is able to avoid the well-known backscatter-induced lock-in effects that degrade gyroscope performance in conventional ring laser gyroscopes (RLGs) that are used in many navigation applications.

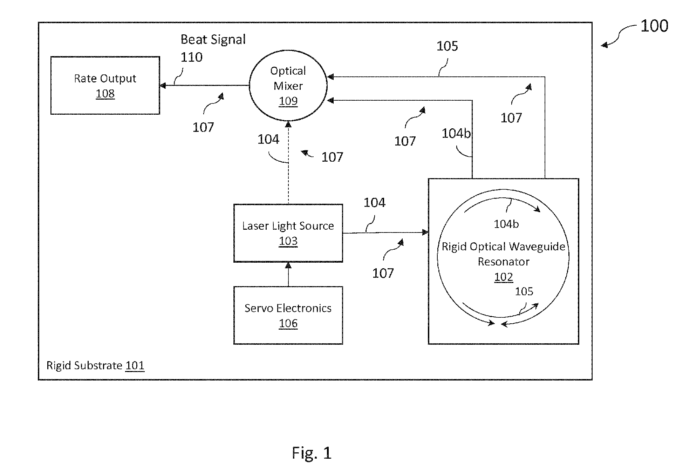

Figure 1 is a block diagram of a resonator optical gyroscope 100 that includes a rigid optical waveguide resonator 102 coupled to a single laser light source 103. In one embodiment, the rigid optical waveguide resonator 102 comprises a lithographically fabricated waveguide on a rigid substrate 101. In some embodiments, substrate 101 may comprise SiO₂ or similar optical grade crystal substrate. Optical waveguide resonator 102 may be formed as a ring such that lightmay propagate around the optical waveguide resonator 102 in both the clockwise and counterclockwise direction.Optical waveguide resonator 102 may be formed with other components, such as those discussed below, on rigid substrate 101 as part of an integrated optical chip.

Laser light source 103 produces a multiple-frequency light field referred to herein as an optical frequency comb 104. In alternate embodiments, laser light source 103 may comprise a mode locked laser or a supercontinuum light source, and/or the optical frequency comb 104 may generated bylaser light source 103 using optical parametric amplification, four wave mixing, electro-optic modulation, or other techniques.The optical frequency comb 104 comprises a plurality of optical frequency components at different optical frequencies,some of which can belocked at resonant frequencies of the optical waveguide resonator 102. For example, in some embodiments, the frequency components of the optical frequency comb from laser light source 103 may be locked to the resonance peaks of the resonator 102 through servo electronics 106.

The frequency spacing between two adjacent components of the optical frequency comb 104 is a function of, and directly related to, the free spectral range of the optical waveguide resonator 102. For example, this frequency spacing can be integer multiples or submultiples of the free spectral range of the optical waveguide resonator. In some embodiments, laser light source 103 is integrated into the same rigid substrate 101 as theoptical waveguide resonator 102 and the multiple-frequency light field produced by laser light source 103 is also delivered to optical waveguide resonator 102 via a rigid waveguide 107 (such as a lithographically fabricated waveguide, for example) on the rigid substrate 101. That is, in such an embodiment, the entire optical path from the laser light source 103 to the optical waveguide resonator 102 is provided by rigid waveguide rather than including any lengths of optical fiber. One or all of laser light source 103, optical mixer 109, and rate output 108 may be formed on the same rigid substrate 101 as optical waveguide resonator 102 and interconnected as shown in Figure 1 by rigid waveguides 107.

Light from the optical frequency comb 104 is incident on resonator 102, and all, or a portion of its energy is coupled into resonator 102. If the frequency spacing of spectral components the optical frequency comb 104 is an integer multiple of the free spectral range, then substantially all of the frequency components are coupled into resonator 102 with high efficiency. If the optical frequency comb 104 is a submultiple of the free spectral range only some of the frequency components are coupled into resonator 102 with high efficiency. The coupled light energy from optical frequency comb 104 that is coupled into the resonator recirculatesmany times around the resonator forming the recirculating optical frequency comb 104b, as a result of the resonance condition of the resonator. As the recirculatingoptical frequency comb 104bpropagates within the optical waveguide resonator 102 in a first direction (a clockwise direction as shown in Figure 1, for example) at least one of the plurality of optical frequency components within the recirculating optical frequency comb 104b will have sufficient amplitude to produce a stimulated Brillouin scattering (SBS) light field 105within the optical waveguide resonator 102. The SBS light field 105 has at least one frequency component shifted from the recirculating optical frequency comb 104b by the Brillouin shift and propagates within the optical waveguide resonator 102 in the opposite direction to that of the recirculating optical frequency comb 104b (a counter-clockwise direction as shown in Figure 1, for example). The magnitude of the Brillouin shift between therecirculating optical frequency comb 104b and the counter-propagating SBS light field 105 is a function of the material used to manufacture the optical waveguide resonator 102. For example, in some embodiments, one or more optical frequency componentsof the optical frequency comb 104 are coupled into the resonator 102 with high efficiency so that one or more optical frequency components of the recirculating optical frequency comb 104b will have sufficient power to generate an SBS light field105. The SBS light field 105 comprises SBS optical frequency components frequency shifted by about 11 GHz from those one or more optical frequency componentsof the recirculating optical frequency comb 104b from which they were generated. This would be the case for implementations where rigid substrate 101comprise SiO₂. The light source 103 that produces the optical frequency comb 104essentially functions as a pump laser source for generating the stimulated Brillouin scattering light field105 comprising one or more frequencies within the optical waveguide resonator 102. The optical waveguide resonator 102 has two different sets of resonance peaks in two counter propagating directions due to the Sagnac effect. The stimulated Brillouin scattering field105 is formed at frequencies where the Brillouin gain overlaps with the resonance peaks of the resonator in the counter propagating direction.

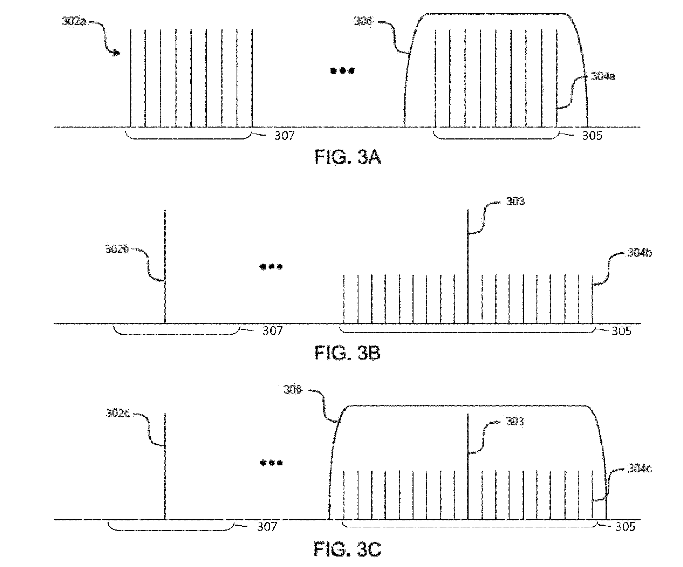

Figure 3A provides an illustrative example depicting the multiple optical frequency components 305 that comprise the recirculating optical frequency comb104b produced by coupling the optical frequency comb 104produced by laser light source 103 and also depicting the SBS optical frequency components 307that comprise the counter propagating SBS light field105 produced by optical waveguide resonator 102. In this particular example, laser light source 103 produces an optical frequency comb 104which in turn produces the recirculating optical frequency comb 104b (shown in this figure as 304a) having a plurality of optical frequency components 305at different frequencies, each having substantially the same amplitude,and where that amplitudeis sufficiently large to generate stimulated Brillouin scattering 302a within optical waveguide resonator 102. Further, the frequency difference between each of the optical frequency components 305 of the optical frequency comb 304ais equal to an integer multiple or submultiple of the free spectral range.

As the recirculating optical frequency comb 304a propagates around optical waveguide resonator 102, the multipleoptical frequency components305 of that light field each generate an associated stimulated SBS optical frequency component307to form the counter-propagating SBS light field302a within the waveguide resonator (i.e., that propagates through the rigid waveguide resonatorin a direction that is opposite to the direction of propagation for optical frequency comb 304a). Each SBS optical frequency component307is frequency shifted from its associated optical frequency component 305 of the comb 304a (i.e., the optical frequency component305 of comb 304a that generated the SBS optical frequency component 307) by the Brillouin shift. That is, in this example, the SBS multiple-frequency light field 302a will be similar to the multiple frequency light fieldofrecirculating optical frequency comb 304a, except the SBS multiple-frequency light field 302a is frequency-shifted by the Brillouin shift. As mentioned above, the amount of Brillouin shift is dependent on the material through which the light fields are propagating. It should be appreciated that in some implementations where the recirculating optical frequency comb 304a has optical frequency components 305 of varying amplitude, some of those optical frequency components may be of sufficient power to generate an associated SBS optical frequency component307in the SBS light field 302a, while others are not. Accordingly, in some implementations, the SBS light field 302a will comprise fewer optical frequency components 307than the recirculating optical frequency comb 304a.

In the embodiment shown in Figure 1, a portion of the SBS light field 105 exits the optical waveguide resonator 102 through coupling mechanisms known to those skilled in the art and is propagated towards an optical mixer 109. The optical mixer 109 also receives a portion of the optical frequency comb (shown at 104) produced by the laser light source 103 and mixes the optical frequency comb 104 with the SBS light field 105. In some implementations, the optical frequency comb 104 is provided directly from the output of laser light source 103 while in other implementations the optical mixer 109 receives portions of both the recirculating optical frequency comb 104b and the SBS light field 105 from the optical waveguide resonator 102. In some embodiments, the optical path followed by optical frequency comb 104 or the recirculating optical frequency comb 104b and/or SBS light field 105 to optical mixer 109 is provided by a rigid waveguide 107. For example, the rigid waveguide 107 may be a lithographically fabricated waveguide formed on the samerigid substrate 101 as optical waveguide resonator 102.

The optical mixer 109mixes the SBS light field 105 including the at least one frequency of light and the multiple-frequency light field from the optical frequency comb 104 or from a portion of the recirculating optical frequency comb 104bto create the beat frequency signal 110 containing at least one beat frequency. The beat frequency signal 110 comprises a signal component having a frequency or frequencies that are a function of the difference between the optical frequency components of the optical frequency comb 104, or a portion of the recirculating optical frequency comb 104b, and the SBS light field 105. The optical mixer 109then provides the beat frequency signal 110 to the rate output 108. In one case, the beat frequency signal 110 contains multiple beat frequencies of multiple FSRs plus the frequency shift due to rotation rate. In a second case, the optical frequency comb portion 104 or the portion of the recirculating optical frequency comb 104b is filtered such that said portion only contains one frequency component of the original optical frequency comb 104, and only one SBS frequency is selectively generated. In this case, the beat frequency signal 110 contains a single, selected beat note of zero FSRs plus the frequency shift due to rotation rate, or it contains a single beat note of a frequency of an integer number of FSRs plus the rotation rate. In this case where said portion contains only one frequency, the optical frequency comb (OFC) helps to down convert the large offset beat signal to just the rotation-induced frequency shift, or to a frequency of small integer number of FSRs plus the rotation rate.Using OFC to down convert the 11 GHz beat signal to a very low beat frequency also service to increase the Signal-to-noise ratio (SNR). A highly stable OFCthussubstantially removes the largeSBS frequency offset from the measurement, making it easier to measure the small frequency shift due to rotation. In this way, the small frequency shift due to rotation is isolated for direct measurement, not mixed in with the large SBS frequency shift (which would add measurement errors in the indication of rotation-induced frequency shifts).The rate output 108 determines the rate of rotation for the gyroscope 100 based on the beat frequency 110.

By potentially using a single laser light source103 to generate an optical frequency comb 104, laser resonator gyroscope100 can offer both low cost and high resolution. Gyroscope 100uses the both the optical frequency comb 104 and stimulated SBS light field105 generated within the optical waveguide resonator 102to obtain the rotation rate information. Also, because the stimulated SBS light field 105 is used to provide rate of rotation information, the gyroscope does not need to include mechanisms to suppress the stimulated Brillouin scattering. Thus, because of the simplified lock-in avoidance mechanism and the use of the stimulated SBS light field 105 to determine rate of rotation, the gyroscope can be produced at a reduced cost.

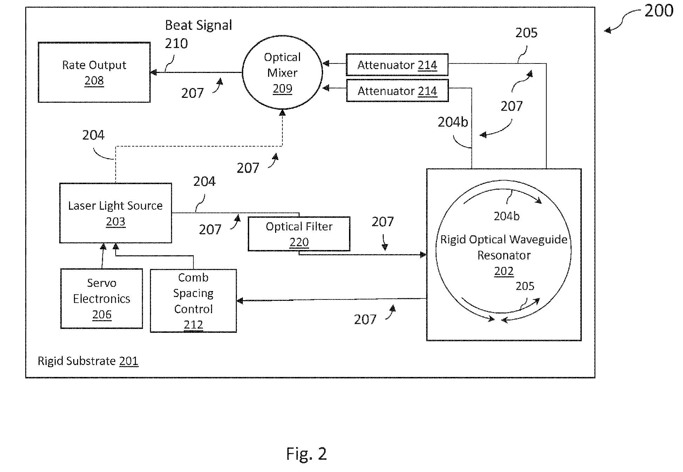

Figure 2 is a block diagram illustrating a gyroscope system 200 that functions as an alternative implementation of the gyroscope system 100 embodiment described in Figure 1. As such, the descriptions and options for elements in Figure 1 apply to like-named elements in Figure 2 and vise-versa. In certain embodiments, system 200 includes laser light source 203, a rigid optical waveguide resonator 202 (which, for example, may be a lithographically fabricated waveguide on a rigid substrate 201), servo electronics 206, optical mixer 209, and rate output 208 that function equivalently to laser light source 103, optical waveguide resonator 102, servo electronics 106, optical mixer 109, and rate output 108 described in Figure 1. Thus, the description of laser light source 103, optical waveguide resonator 102, servo electronics 106, optical mixer 109, and rate output 108 apply to laser light source 203, optical waveguide resonator 202, servo electronics 206, optical mixer 209, and rate output 208. For example, one or all of laser light source 203, optical mixer 209, servo electronics 206, and rate output 208 may be formed on the same rigid substrate 201 as optical waveguide resonator 202 and interconnected by rigid waveguides 207 as shown in Figure 2.

In addition to the components that correspond with components described in relation to system 100 in Figure 1, system 200 also includes an optical filter 220. Optical filter 220 filters the optical frequency comb 204 generated bylight source 203 to ensure that the spectrum of thefrequencies of thatmultiple-frequency light fieldwill not overlap with the frequencies contained in the spectrum of the SBSlight field205 produced within the optical waveguide resonator 202. Optical filter 220 may be formed on the same rigid substrate 201 as optical waveguide resonator 202 and interconnected as shown in Figure 2 by rigid waveguides 207.

A portion of the light coupled from optical frequency comb 204 is coupled into the resonator 202 to form recirculating optical frequency comb 204b. As the recirculatingoptical frequency comb 204bpropagates within the optical waveguide resonator 202 in a first direction (a clockwise direction as shown in Figure 2, for example) at least one of the plurality of optical frequency components within the comb 204b will have sufficient intensity to produce a stimulated Brillouin scattering (SBS) light field 205 within the optical waveguide resonator 202. The SBS light field 205 has at least one frequency component shifted from the optical frequency comb 204b by the Brillouin shift and propagates within the optical waveguide resonator 202 in the opposite direction to that of the recirculating optical frequency comb (a counter-clockwise direction as shown in Figure 2, for example). The magnitude of the Brillouin shift between therecirculating optical frequency comb 204b and the counter-propagating SBS light field 205 depends on the material used to manufacture the optical waveguide resonator 202. For example, in some embodiments, one or more optical frequency components of the optical recirculating frequency comb 204b having sufficient power will generate an SBS light field 205 that comprises SBS optical frequency components frequency shifted by about 11 GHz from those one or more optical frequency components of the recirculating optical frequency comb 204b. This would be the case for implementations where rigid substrate 201 comprise SiO₂. The light source 203 that produces the optical frequency comb 204essentially functions as a pump laser source for generating the stimulated Brillouin scattering light field 205 comprising one or more frequencies within the optical waveguide resonator 202. The optical waveguide resonator 202 has two different sets of resonance peaks in two counter propagating directions due to the Sagnac effect. The stimulated Brillouin scattering field205 is formed at frequencies where the Brillouin gain overlaps with the resonance peaks of the resonator in the counter propagating direction.

When one or more optical frequency components of therecirculating optical frequency comb 204 and SBSmultiple-frequency light field 205 overlap in their frequency spectra, and there can be optical backscatter from one direction into the other, the counter-propagating signals (204b, 205) in the gyroscope's resonator 202 can become locked onto one another. When counter-propagating signals become locked onto one another, the measured rotation rate becomes zero even when the actual value is not zero. The optical filter 220limits the bandwidth of the optical frequency comb 204 so that it prevents signals that havesimilar frequencies from propagating within the optical waveguide resonator 202 in opposite directions. For example, where the Brillouin shift for the optical waveguide resonator is 11 GHz, the optical filter 220 attenuates an optical frequency comb 204generated by a light source 203 such that frequencies of the SBS optical frequency components that are shifted 11 GHz do not overlap with the non-shiftedoptical frequency components of the optical frequency comb 204 and recirculating optical frequency comb 204b.

Figure 3A provides an illustration at 306 of the pass band of optical filter 220with respect to the components 305 of optical frequency comb 304aIn certain embodiments, the frequencies of the components 305 of the multiple-frequency light fieldconstituting the optical frequency comb 304a, and therefore the frequency components of the recirculating optical frequency comb, may overlap with the frequencies of certain components 307of the SBS light field 302a. The overlapping frequencies can cause a gyroscope to exhibit lock-in, which degrades the performance of the gyroscope. The overlapping frequencies could also diminish the ability to precisely lock the CW propagating wave to the CW resonances of the resonator in the presence of optical backscatter, for example. To avoid the overlapping frequencies, the multiple-frequency light fieldconstituting the optical frequency comb 304a can be filtered by optical filter 220 before the light fieldconstituting the optical frequency comb 304a is coupled into the resonator. The pass band 306 of optical filter 220 attenuates the frequency spectrum of the light field comprised of the optical frequency comb 304a that would otherwise overlap with frequencies in the SBS light field 302a. In this case, the spectrum of the recirculating frequency comb does not overlap with the spectrum of the SBS light field 302a.

In at least one embodiment, system 200 also includes a free spectral range(FSR) control 212. Free spectral range control 212 may be formed on the same rigid substrate 201 as optical waveguide resonator 202 and interconnected as shown in Figure 2 by rigid waveguides 207. As mentioned above, optical frequency comb 204 includes a multiple-frequency light fieldthat is locked to resonant frequencies of the optical waveguide resonator 202. Further, the frequency components305 in the optical frequency comb 204 are spaced apart from one another according to multiples or submultiples of the free spectral range of the optical waveguide resonator 202. During the operation of system 200, the free spectral range of the optical waveguide resonator202 changes according to the environment of the optical waveguide resonator 202. For example, as the optical waveguide resonator 202 warms or cools, the optical waveguide resonator 202 can accordingly expand or contract, thus changing the length of the optical waveguide resonator 202. The expansion and contraction of the optical waveguide resonator 202 and resulting change in path length of the optical waveguide resonator 202 changes the free spectral range of the optical waveguide resonator 202. Due to the changing free spectral range, the system 200 includes the comb spacing control 212 to adjust the frequencies of the multiple-frequency light fieldproduced by the optical frequency comb 204, or else the path length of the resonator, such that the difference between the frequency components of the multiple-frequency light fieldof the recirculating optical frequency comb generated 204b by the optical frequency comb 204 passing through filter 220 are equal to a multiple or submultiple of the free spectral range of the optical waveguide resonator 202. To adjust the frequency spacing to match the free spectral range of the optical waveguide resonator 202, the free spectral range control is coupled to the optical waveguide resonator 202 and the recirculating optical frequency comb 204b. The free spectral range control 212 receives an output that includes the recirculatingoptical frequency comb 204bfrom the optical waveguide resonator 202 and determines any adjustments that need to be made to the optical frequency comb 204 (or to the resonator) so that the differences between the frequencies match a multiple or submultiple of the free spectral range. The free spectral range control 212 determines the adjustments based on a signal provided by the optical waveguide resonator202 and provides the adjustments to the optical frequency comb 204 (or the resonator) using methods and systems known to one having skill in the art. For instance, the resonator path length can be adjusted thermally by servo system 206 to actuate a heater, such that the temperature of the waveguide can be actively maintained at a value which results in a free spectral range compatible with the comb.

Further, in at least one implementation,one or more optional attenuators (shown at 214)optionally optically attenuate one or both of the SBSlight field205 and a portion of the recirculatingoptical frequency comb light field204b prior to mixing by optical mixer 209. Attenuators 214 may be formed on the same rigid substrate 201 as optical waveguide resonator 202 and interconnected as shown in Figure 2 by rigid waveguides. The attenuators 214 can ensure that the signals are at the appropriate signal level for mixing and for the determination of the rate of rotation. In an alternative embodiment, where the SBSlight field205ismixed with the multiple frequency light fieldconstituting the optical frequency comb 204 that has been filtered or produced directly from the light source 203 an attenuator 214 attenuates the SBS light field205 that was produced by the optical waveguide resonator 202.

In the embodiment shown in Figure 2, a portion of the SBS light field 205 exits the optical waveguide resonator 202 through coupling mechanisms known to those skilled in the art and is propagated towards an optical mixer 209. The optical mixer 209 also receives a portion of the recirculating optical frequency comb (shown at 204b) or light contains the same spectral content of the recirculating optical frequency comb 204b it with the SBS light field 205. In some implementations, the optical frequency comb 204 is provided directly from the output of laser light source 203 while in other implementations the optical mixer 209 receives portions of both the recirculating optical frequency comb 204b and the SBS light field 205 from the optical waveguide resonator 202. In some embodiments, the optical path followed by optical frequency comb 204 and/or the portion of the recirculating optical frequency comb 204b and/or SBS light field 205 to optical mixer 209 is provided by a rigid waveguide 207. For example, the rigid waveguide 207 may be a lithographically fabricated waveguide formed on the samerigid substrate 201 as optical waveguide resonator 202.

The opticalmixer 209 mixes the SBS light field 205 including the at least one frequency of light and the multiple-frequency light field from the optical frequency comb 204 or the recirculating optical frequency comb 204b to create at least one beat frequency signal 210. The beat frequency signal 210 comprises a signal component having a frequency that is a function of the difference between the optical frequency components of the optical frequency comb 204 or the recirculating optical frequency comb 204b, and the SBS light field 205. The optical mixer 209 then provides the beat frequency signal 210 to the rate output 208. The rate output 208 determines the rate of rotation for the gyroscope 200 based on the beat frequency 210.

Figure 3B provides another example depicting the multiple optical frequency components 305 that comprise the recirculating optical frequency comb (104b, 204b) produced by laser light source (103, 203)and the SBS optical frequency components 307that comprise the counter propagating SBS light field (105, 205)produced by optical waveguide resonator (102, 202).In this particular example, laser light source (103, 203) produces an optical frequency comb (104, 204)that in turn produce recirculating optical frequency comb (104b, 204b) (shown in this figure at 304b) having a plurality of optical frequency components 305 at different frequencies. As with the Example in Figure 3A, in Figure 3B the frequency difference between the frequency components 305 of recirculating optical frequency comb 304b is equal to a multiple or submultiple of the free spectral range.

Here, laser light source(103, 203)produces a multiple-frequency light field having only a single component in recirculating optical frequency comb (shown at 303) that has an intensity (i.e., amplitude or power) large enough to generate stimulated Brillouin scattering (SBS) in resonator 202. Figure 3B provides an example where that component 303 is located for example at a center frequency within the spectrum of recirculating optical frequency comb 304b. The other frequency components 305 of recirculatingoptical frequency comb 304b have insufficient intensity to generate stimulate Brillouin scattering. As recirculatingoptical frequency comb 304b propagates around the optical waveguide resonator, optical frequency component 303 generates stimulated Brillouin scattering within the optical waveguide resonator (102, 202). The Brillouin scattering creates a SBS light field 302b that is at a frequency that is equal to the frequency of the center optical fieldfrequency component 303 frequency shifted by the Brillouin shift(for example, about 11GHz) associated with the material of the optical waveguide resonator.

In certain embodiments, the components 305 of the multiple-frequency light fieldcomprised of therecirculating optical frequency comb 304bmayoverlap with the frequency spectrumcontained within the SBS light field302b. The overlapping frequencies can cause a gyroscope to exhibit lock-in effects, or degrade the ability to precisely adjust lock the CW wave comb frequencies to the frequencies of the optical waveguide resonator as desired, which degrades the performance of the gyroscope. To avoid the problem of overlapping frequencies, the frequency components of the light fieldconstituting therecirculatingoptical frequency comb 304may be configured so that frequencies are greater than the frequency of the Brillouin light field 302b.

Figure 3C provides another example depicting the multiple optical frequency components 305 that comprise the recirculating optical frequency comb (104b, 204b) produced by optical frequency comb (104, 204) produced by laser light source (103, 203) and the SBS optical frequency components 307 that comprise the counter propagating SBS light field (105, 205) produced by optical waveguide resonator (102, 202).In certain embodiments, the laser light source producing the optical frequency comb (104, 204) that generates therecirculating optical frequency comb 304c, produces a multiple-frequency light field having a light field frequency component 303 (located for example at a center frequency within the spectrum of recirculating optical frequency comb 304c) that has an intensity (i.e., amplitude or power) large enough to generate stimulated Brillouin scattering (SBS) while the other frequency components of recirculating optical frequency comb 304b have insufficient intensity to stimulate Brillouin scattering. As with the Example in Figure 3A and 3B, in Figure 3C the frequency difference between the frequency components of recirculating optical frequency comb 304c is equal to a multiple or submultiple of the free spectral range.As the multiple-frequency light fieldconstituting therecirculating optical frequency comb 304c propagates around the rigid optical waveguide resonator, the center light field frequency component 303, having the center frequency,generates SBS. The Brillouin scattering creates anSBSlight field 302c that is at a frequency that is shifted by the Brillouin shift (for example, about 11GHz) associated with the material of the optical waveguide resonator.

In certain embodiments, the frequencies of the multiple-frequency light fieldconstitutingthe recirculating optical frequency comb 304cmay overlap with the frequency of the SBS light field 302c. The overlapping frequencies, in the presence of optical backscatter, can cause a gyroscope to exhibit lock-in, or degrade the precision of the lock between frequencies of the frequency comb 304c and the resonator resonance frequencies which degrades the performance of the gyroscope. To avoid the overlapping frequencies, the multiple-frequency light fieldconstitutingthe optical frequency comb emitted by the laser can be filtered by a pass band 306 (see for example, as applied by optical filter 220 in Figure 2) to form the recirculating optical frequency comb 304c that propagates in the rigid optical waveguide resonator 202. The pass band 306 of optical filter 220eliminatesfrequency componentsin optical frequency comb emitted by the laser that would overlap with frequencies in the spectrum ofthe SBS light field 302c.

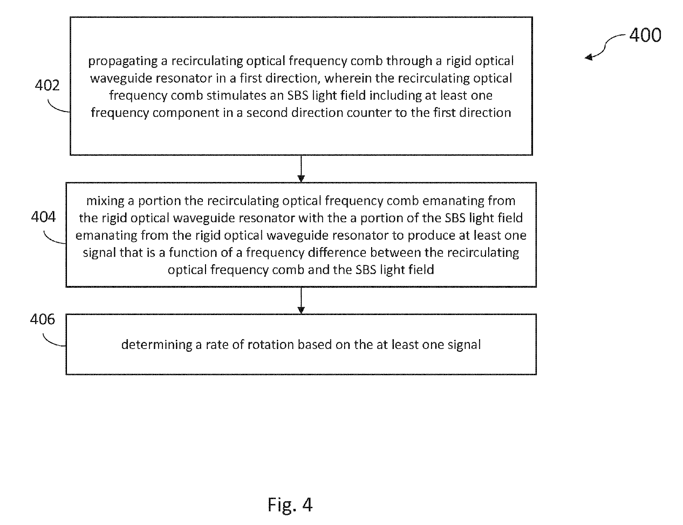

Figure 4 is a flow diagram of a method 400 for acquiring rotation information in an optical frequency comb stimulated Brillouin scattering (SBS) gyroscope. In alternate implementations, method 400 may be performed using the resonator optical gyroscope systems 100 or 200 described above. As such, the descriptions and options for elements discussed with respect to Figures 1 and 2 may apply to like-named elements in discussed in Figure 4 and vise-versa. The method begins at 402 with propagating a recirculating optical frequency comb through a rigid optical waveguide resonator in a first direction, wherein the recirculating optical frequency comb stimulates an SBS light field including at least one frequency component in a second direction counter to the first direction. The rigid optical waveguide resonator is fabricated on a rigid substrate and in one implementation is a lithographically fabricated waveguide. The rigid substrate may comprise SiO₂,silicon,or similar optical grade crystal substrate. As discussed above, the term the recirculating optical frequency comb as used herein refers to a multiple-frequency light field.The frequency components of the optical frequency comb are locked to the resonance peaks of the rigid waveguide resonator, which may be achieved through servo electronicssuch as shown at 106 or 206 above. For example, in one implementation, a single light source generates a multiple-frequency light field constituting an optical frequency comb that is coupled into the resonator forms the recirculating optical frequency comb that propagates through an optical waveguide resonator in a clockwise direction. One or more of the optical frequency components constitutingthe recirculating optical frequency comb generateanSBS light field with at least one frequency component. The SBS light field propagates through the optical waveguide resonator in a direction counter to that of the recirculating optical frequency comb. Further the frequency component(s) of theSBS light field are shifted with respect to the corresponding frequency components in the comb by a Brillouin shift associated with the material used to fabricate the optical waveguide resonator.

Method 400 proceeds to 404 with mixing of a portion the recirculating optical frequency comb emanating from the rigid optical waveguide resonator in a first directionwith the a portion of the SBS light fieldemanating from the rigid optical waveguide resonator in a first directionto produce at least one signal that is a function of a frequency difference between the recirculating optical frequency comb and the SBS light field. In one embodiment, mixing the portions of the recirculating optical frequency comb with the SBS light field is performed by a mixer formed on the same rigid substrate at the rigid optical waveguide resonator. That is, this resulting signal comprises a beat frequency signal derived from the recirculating optical frequency comb and SBS light that is a function of the rotation rate of the rigid waveguide resonator. As such, the method 400 may proceed to 406 with determining a rate of rotation based on the at least one signal. For example, as the gyroscope/rigid resonator rotates, the frequency difference between the SBS light field and the recirculating optical frequency comb changes in proportion to the rate of rotation. When these optical signals are mixed, a beat signal is produced having a beat frequency that is a function of the difference between the frequency of the SBS light fieldand the recirculating optical frequency comb. Since the nominal zero rotation rate beat signal is a known value (i.e., the difference between the frequency of the SBS light field and the recirculating optical frequency comb without the influence of Sagnac effect) differences between that nominal zero rotation rate beat signal and the output produced by mixing the optical signals at 404 can be used to determine the rate of rotation.

### Example Embodiments

Example 1 includes a system comprising: a light source configured to produce an optical frequency comb comprising a multiple-frequency light field; a rigid optical waveguide resonator coupled to the light source, wherein a recirculating optical frequency comb produced from the optical frequency comb propagates in a first direction around the rigid optical waveguide resonator and generates within the rigid optical waveguide a stimulated Brillouin scattering (SBS) light field comprising at least one SBS frequency component, and wherein one or more optical frequency components of the recirculating optical frequency comb are locked on resonance peaks of the rigid optical waveguide resonator; and an optical mixer configured to produce an optical beat signal that varies as a function of a frequency difference between the stimulated Brillouin scattering light field and the recirculating optical frequency comb.

Example 2 includes the system of example 1, wherein the rigid optical waveguide resonator is fabricated on a rigid substrate.

Example 3 includes the system of example 2, wherein the rigid optical waveguide resonator is a lithographically fabricated waveguide formed on the rigid substrate.

Example 4 includes the system of any of examples 2-3, wherein the rigid optical waveguide resonator is formed on an optical grade crystal substrate.

Example 5 includes the system of any of examples 2-4, wherein one or both of the light source and the optical mixer are formed on the rigid substrate and interconnected with the rigid optical waveguide resonator by rigid waveguides.

Example 6 includes the system of any of examples 1-5, further comprising servo electronics configured lock the optical frequency comb to the resonance peaks of the rigid waveguide resonator based on feedback signals fromprocessed resonator output that contains information about deviation of the plurality ofcomponent frequencies from resonance peaks in the first direction of the rigid optical waveguideresonator.

Example 7 includes the system of example 6, wherein the feedback signal comprises information about deviation of the one or more optical frequency components of the recirculating optical frequency comb from resonance peaks in the first direction of the rigid optical waveguide resonator; and wherein one or more frequency components of the optical frequency comb have a frequency separation that tracks free spectral range drift of the rigid optical waveguide resonator.

Example 8 includes the system of any of examples 1-7, further comprising an optical filter configured to filter the multiple-frequency light field such that a first frequency range of the recirculating optical frequency comb does not overlap with a second frequency range of the stimulated Brillouin scattering light field.

Example 9 includes the system of example 8, wherein the rigid optical waveguide resonator is coupled to the optical filter such that the rigid optical waveguide resonator receives the multiple-frequency light field after the multiple-frequency light field is filtered.

Example 10 includes the system of any of examples 8-9, wherein the rigid optical waveguide resonator is fabricated on a rigid substrate; and wherein at least one of the light source, the optical mixer, and the optical filter are formed on the rigid substrate and interconnected with the rigid optical waveguide resonator by rigid waveguides.

Example 11 includes the system of any of examples 1-10, wherein the optical mixer receives both the recirculating optical frequency comb and the stimulated Brillouin scattering light field from the rigid optical waveguide resonator via rigid waveguides.

Example 12 includes the system of any of examples 1-11, wherein the optical mixer receives the optical frequency comb from the light source via a first rigid waveguide and the stimulated Brillouin scattering light field from the rigid optical waveguide resonator via a second rigid waveguide.

Example 13 includes the system of any of examples 1-12, further comprising at least one attenuator coupled to the optical mixer, the at least one attenuator configured to attenuate at least one of the recirculating optical frequency comb and the stimulated Brillouin scattering light field prior to the optical mixer.

Example 14 includes the system of any of examples 1-13, further comprising a comb spacing control coupled between the rigid optical waveguide resonator and the light source, the comb spacing control configured to adjust the frequency separation of the multiple-frequency light field to track the free spectral range of the optical waveguide resonator.

Example 15 includes the system of any of examples 1-14, wherein the stimulated Brillouin scattering (SBS) light field is generated by fewer than all of the one or more optical frequency components of the recirculating optical frequency comb.

Example 16 includes a method for measuring rotation, the method comprising: propagating a recirculating optical frequency comb through a rigid optical waveguide resonator in a first direction, wherein the recirculating optical frequency comb stimulates a stimulated Brillouin scattering (SBS) light field including at least one frequency component in a second direction counter to the first direction; mixing a portion the recirculating optical frequency comb emanating from the rigid optical waveguide resonator with the a portion of the SBS light field emanating from the rigid optical waveguide resonator to produce at least one signal that is a function of a frequency difference between the recirculating optical frequency comb and the SBS light field; and determining a rate of rotation based on the at least one signal.

Example 17 includes the method of example 16, further comprising: controlling a light source that produces the optical frequency comb such that a plurality of frequency components of the recirculating optical frequency comb are locked to resonance peaks of the rigid optical waveguide resonator and have a frequency separation that tracks free spectral range drift of the rigid optical waveguide resonator.

Example 18 includes the method of any of examples 16-17, further comprising: filtering the multiple-frequency light field such that a first frequency range of the recirculating optical frequency comb does not overlap with a second frequency range of the stimulated Brillouin scattering light field.

Example 19 includes the method of any of examples 16-18, wherein the rigid optical waveguide resonator is fabricated on a rigid substrate comprising an optical grade crystal.

Example 20 includes the method of example 19, wherein one or both of a light source that produces the optical frequency comb and an optical mixer that mixes the portion the recirculating optical frequency comb emanating from the rigid optical waveguide resonator with the portion of the SBS light field emanating from the rigid optical waveguide resonatorr are formed on the rigid substrate and interconnected with the rigid optical waveguide resonator by rigid waveguides.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
alight source (103, 203) configured to produce an optical frequency comb (104, 204) comprising a multiple-frequency light field;
a rigid optical waveguide resonator (102, 202) coupled to the light source (103, 203), wherein a recirculating optical frequency comb (104b, 204b)produced from the optical frequency comb (104, 204) propagates in a first direction around the rigid optical waveguide resonator (102, 202) and generates within the rigid optical waveguide a stimulated Brillouin scattering (SBS) light field (105, 205) comprising at least one SBS frequency component, and wherein one or more optical frequency components of the recirculating optical frequency comb (104b, 204b) are locked on resonance peaks of the rigid optical waveguide resonator (102, 202); and
an optical mixer (109, 209) configured to produce an optical beat signal that varies as a function of a frequency difference between the stimulated Brillouin scattering light field (105, 205) and the recirculating optical frequency comb (104b, 204b).

2. The system of claim 1, wherein the rigid optical waveguide resonator (102, 202) is fabricated on a rigid substrate (101, 201).

3. The system of claim 2, wherein the rigid optical waveguide resonator (102, 202) is formed on an optical grade crystal substrate.

4. The system of claim 2, wherein one or both of the light source (103, 203) and the optical mixer (109, 209) are formed on the rigid substrate (101, 201) and interconnected with the rigid optical waveguide resonator (102, 202) by rigid waveguides (107, 207).

5. The system of claim 1, further comprising servo electronics (106, 206) configured lock the optical frequency comb (104, 204) to the resonance peaks of rigid optical waveguide resonator (102, 202)based on feedback signals fromprocessed resonator output that contains information about deviation of the plurality ofcomponent frequencies from resonance peaks in the first direction of the rigid optical waveguide resonator (102, 202).

6. The system of claim 1, further comprising at least one of:
an optical filter (220) configured to filter the multiple-frequency light field such that a first frequency range of the recirculating optical frequency comb (104b, 204b) does not overlap with a second frequency range of the stimulated Brillouin scattering light field (105, 205);
at least one attenuator (214) coupled to the optical mixer (109, 209), the at least one attenuator configured to attenuate at least one of the recirculating optical frequency comb (104b, 204b)and the stimulated Brillouin scattering light field (105, 205) prior to the optical mixer (109, 209); or
a comb spacing control (212) coupled between the rigid optical waveguide resonator (102, 202) and the light source (103, 203), the comb spacing control (212) configured to adjust the frequency separation of the multiple-frequency light field to track the free spectral range of the rigid optical waveguide resonator (102, 202).

7. A method (400) for measuring rotation, the method comprising:
propagating a recirculating optical frequency comb (104b, 204b) through a rigid optical waveguide resonator (102, 202) in a first direction, wherein the recirculating optical frequency comb (104b, 204b) stimulates a stimulated Brillouin scattering (SBS) light field (105, 205) including at least one frequency component in a second direction counter to the first direction;
mixing a portion the recirculating optical frequency comb (104b, 204b) emanating from the rigid optical waveguide resonator (102, 202) with the a portion of the SBS light field (105, 205) emanating from the rigid optical waveguide resonator (102, 202) to produce at least one signal that is a function of a frequency difference between the recirculating optical frequency comb (104b, 204b) and the SBS light field (105, 205); and
determining a rate of rotation based on the at least one signal.

8. The method of claim 7, further comprising:
controlling a light source (103, 203) that produces the optical frequency comb (104, 204)such that a plurality of frequency components of the recirculating optical frequency comb (104b, 204b) are locked to resonance peaks of the rigid optical waveguide resonator (102, 202) and have a frequency separation that tracks free spectral range drift of the rigid optical waveguide resonator (102, 202).

9. The method of claim 7, wherein the rigid optical waveguide resonator (102, 202) is fabricated on a rigid substrate (101, 201) comprisingan optical grade crystal.

10. The method of claim 9, wherein one or both of a light source (103, 203) that produces the optical frequency comb (104, 204) and an optical mixer (109, 209) that mixes the portion the recirculating optical frequency comb (104b, 204b) emanating from the rigid optical waveguide resonator (102, 202) with the portion of the SBS light field (105, 205) emanating from the resonator are formed on the rigid substrate (101, 201) and interconnected with the rigid optical waveguide resonator (102, 202) by rigid waveguides (107, 207).
